Europäisches Patentamt

European Patent Office

Office européen des brevets

(11) Veröffentlichungsnummer: **0 282 882 B1**

(12) **EUROPÄISCHE PATENTSCHRIFT**

(45) Veröffentlichungstag der Patentschrift: **23.06.93**

(21) Anmeldenummer: **88103664.4**

(22) Anmeldetag: **09.03.88**

(51) Int. Cl.5: **C08L 23/02**, C08K 5/00, C08L 27/12

(54) **Polyolefinformmasse.**

(30) Priorität: **14.03.87 DE 3708384**

(43) Veröffentlichungstag der Anmeldung:
**21.09.88 Patentblatt 88/38**

(45) Bekanntmachung des Hinweises auf die
Patenterteilung:
**23.06.93 Patentblatt 93/25**

(84) Benannte Vertragsstaaten:
**AT BE DE ES FR GB IT NL SE**

(56) Entgegenhaltungen:
**US-A- 4 581 406**

**RESEARCH DISCLOSURE, Nr. 232, August
1983, Havant, Hampshire (GB); Seite 264, Ref.
23202&NUM;**

**PATENT ABSTRACTS OF JAPAN, Band 10,
Nr. 258, 04 September 1986&NUM;**

(73) Patentinhaber: **HOECHST AKTIENGESELL-
SCHAFT
Postfach 80 03 20
W-6230 Frankfurt am Main 80(DE)**

(72) Erfinder: **Piesold, Jan-Peter, Dr.
Oblatterwallstrasse 44
W-8900 Augsburg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 282 882 B1

**Beschreibung**

Die vorliegende Erfindung bezieht sich auf eine Polyolefinformmasse mit verbesserten Verarbeitungseigenschaften.

Die Verarbeitung von Polyolefinen zu Folien, Platten oder Rohren geschieht meist durch Extrusion. Hierbei wird der Kunststoff in einem Extruder aufgeschmolzen und durch eine Düse in die gewünschte Form gepresst.

Aus wirtschaftlichen Gründen ist man an einem möglichst hohen Durchsatz des Extruders interessiert. Eine Möglichkeit, den Durchsatz eines vorgegebenen Extruders zu erhöhen, besteht in einer Erhöhung der Drehzahl der Schnecke. Das viskoelastische Verhalten der Polymerschmelze setzt diesem Verfahren jedoch Grenzen, welche weit unterhalb der maschinentechnisch erreichbaren Werte liegen. Übersteigt nämlich die Extrusionsgeschwindigkeit einen von dem zu verarbeitendem Polymer abhängigen Wert, so treten Defekte in der Oberfläche des extrudiertem Materials auf, die als Schmelzbruch bezeichnet werden.

Obgleich der Fachmann verschiedene Arten von Schmelzbruch unterscheidet, versteht man unter Schmelzbruch in der Praxis eine matte, rauhe Oberfläche des Extrudats, auch Haifischhaut oder "shark skin" genannt.

Zur Vermeidung dieses unerwünschten Schmelzbruchs wurden mehrere Maßnahmen vorgeschlagen.

Da der Schmelzbruch mit steigender Temperatur zu höheren Schergeschwindigkeiten verschoben wird, kann man die Polymerschmelze stärker erhitzen. Diese Methode ist jedoch nur begrenzt anwendbar. Steigende Verarbeitungstemperaturen führen zu erhöhten Betriebskosten, zu Problemen bei der Wärmeabfuhr aus dem Fertigprodukt und möglicherweise zu Verfärbungen und thermischen Abbau des Polymeren.

Eine andere Möglichkeit besteht in einer Veränderung der Düsengeometrie des Extruders. Düsen mit einem größeren Querschnitt ergeben bei gleicher Schergeschwindigkeit einen größeren Massedurchsatz. Diese Maßnahme wird besonders bei der Herstellung von mono- oder biaxial verstreckten Folien angewendet, bei denen die durch die Vergrößerung des Düsenspalts erhaltene dickere Folie durch ein größeres Verstreckungsverhältnis wieder auf die gewünschte Stärke gebracht werden kann. Dieses Verfahren ist jedoch nicht überall anwendbar.

Eine weitere Möglichkeit, den Schmelzbruch zu vermeiden, besteht darin, daß durch Additive das viskoelastische Verhalten der Polymerschmelze verändert wird. Derartige Additive, die mit dem Polyolefin im allgemeinen gut verträglich sind, sind z.B. niedermolekulare Polyethylenwachse. Allerdings können gut verträgliche Additive die Eigenschaften des Polymeren, beispielsweise die Reißfestigkeit negativ beeinflussen.

Schließlich besteht noch die Möglichkeit, durch geeignete Additive die Wechselwirkungen der Polymerschmelze mit der Düsenwandung zu verändern. Derartige Additive sind im allgemeinen mit dem Polyolefin unverträglich. Sie wandern an die Grenzschicht zwischen Polymerschmelze und der Düsenwand und wirken hier als Gleitmittel.

Bekannt ist die Verwendung von speziellen fluorhaltigen Polymeren als Verarbeitungshilfsmittel für Polyolefine (vgl. US-PS 3125547). Diese fluorhaltigen Polymeren werden im allgemeinen aus Vinylidenfluorid, Vinylfluorid, Hexafluorpropen, Chlortrifluorethylen oder Tetrafluorethylen erhalten. Die Verbesserung des Fließverhaltens ist jedoch noch nicht ausreichend.

Bekannt ist weiterhin, daß ein spezielles Polyethylenwachs die Schmelzviskosität von linearem Polyethylen niedriger Dichte (LLDPE) erniedrigen kann und somit beim Extrudieren einen höheren Ausstoß bei geringerem Energieaufwand bewirkt (vgl. Res. Disclosure, Nr. 232, August 1983, S. 264, Referenz 23202).

Es wurde nun gefunden, daß bei einer Polyolefinformmasse, welche ein fluorhaltiges Polymer zusammen mit einem Wachs enthält, der Verarbeitungsbereich, in welchem keine Oberflächendefekte auftreten, sehr stark erweitert werden kann.

Die vorliegende Erfindung betrifft somit die in den Ansprüchen beschriebene Polyolefinformmasse.

Geeignete Polyolefine, welche bei der Verarbeitung besonders häufig die beschriebenen Oberflächendefekte zeigen, werden durch Copolymerisation von Ethylen mit 1-Olefinen, die 3-10 Kohlenstoffatome enthalten, hergestellt. Diese Polyolefine besitzen Dichten, die üblicherweise im Bereich von 0,900 - 0,930 g/cm$^3$ liegen. Zu ihrer Herstellung werden Niederdruck- und Hochdruckpolymerisationsverfahren in der Gasphase und in Lösung angewendet. Produkte der beschriebenen Art sind auf dem Markt unter der Bezeichnung LLDPE (Linear-Low-Density-Polyethylen) erhältlich.

Der Anteil des Polyolefins an der Polyolefinformmasse beträgt 95,0 bis 99,998 Gew.-%, vorzugsweise 98,0 bis 99,9 Gew.-%, insbesondere 99,88 bis 99,97 Gew.-%.

Geeignete fluorhaltige Polymere besitzen einen Schmelz- oder Erweichungspunkt im Bereich von 100 bis 300 °C, bevorzugt 110 bis 230 °C. Geeignete fluorhaltige Polymere haben einen Fluorgehalt von über 50 Gew.-%, besonders geeignet sind solche fluorhaltige Polymere, deren Fluorgehalt oberhalb 66 Gewichtpro-

2

zent liegt.

Fluorpolymere, die diesen Anforderungen besonders gut entsprechen, werden durch Copolymerisation von Vinylidenfluorid und Hexafluorpropylen oder durch Terpolymerisation von Vinylidenfluorid, Hexafluorpropylen und Tetrafluorethylen hergestellt. Besonders bevorzugt ist ein Terpolymerisat von Vinylidenfluorid, Hexafluorpropylen und Tetrafluorethylen mit einem Fluorgehalt von 68 bis 76 Gew.-%. Der Anteil des fluorhaltigen Polymeren an der Polyolefinformmasse beträgt 0,001 bis 2,5 Gew.-% vorzugsweise 0,05 bis 1 Gew.-%, insbesondere 0,02 bis 0,06 Gew.-%.

Geeignete Wachse sind technische Montansäure und ihre Ester und Salze.

Der Anteil des Wachses an der Polyolefinformmasse beträgt 0,001 bis 2,5 Gew.-%, vorzugsweise 0,005 bis 1 Gew.-%, insbesondere 0,01 bis 0,06 Gew.-%.

Zusätzlich kann die erfindungsgemäße Polyolefinformmasse noch weitere Additive enthalten, wie beispielsweise Antioxidantien, beispielsweise alkylierte Monophenole, alkylierte Hydrochinone, hydroxylierte Thiodiphenylether, Alkyliden-Bisphenole, Benzylverbindungen, Acylaminophenole, Ester der $\beta$- (3,5-Di-tert. butyl-4-hydroxyphenyl)-propionsäure, UV-Absorber und Lichtschutzmittel, beispielsweise 2-(2'Hydroxyphenyl)-benztriazole, 2-Hydroxybenzophenone, Ester von gegebenenfalls substituierten Benzoesäuren, Acrylate, Nickelverbindungen, sterisch gehinderte Amine, Oxalsäurediamide, Metalldesaktivatoren, Phosphate und Phosponite, Peroxidzerstörende Verbindungen, basische Costabilisatoren, Nukleierungsmittel, Füllstoffe und Verstärkungsmittel, Weichmacher, optische Aufheller, Flammschutzmittel, Antistatika, Treibmittel und andere Gleitmittel.

Für die Zudosierung des fluorhaltigen Polymeren und des Wachses kommen alle Verfahren in Frage, die auch sonst bei der Zugabe von Additiven angewandt werden. So können die beiden Komponenten dem Polyolefin bei der Herstellung oder Verarbeitung gleichzeitig oder nacheinander kontinuierlich zudosiert werden.

Besonders vorteilhaft ist die Herstellung einer höher konzentrierten Mischung von fluorhaltigen Polymer und Wachs in einem geeignetem Trägermaterial, beispielsweise einem Polyolefin. Diese Konzentrate können 0,005 bis 20 Gew.-%, vorzugsweise 1 bis 3 Gew.-% fluorhaltiges Polymer und 0,005 bis 25 Gew.-%, vorzugsweise 0,5 bis 3 Gew.-% Wachs enthalten. Neben der Herstellung eines Konzentrats, welches sowohl fluorhaltiges Polymer als auch Wachs enthält, ist es auch möglich, Konzentrate zu verwenden, die die Einzelkomponenten in den oben angegebenen Konzentrationen enthalten.

Die Konzentrate können allen aus der Technik bekannten Verfahren hergestellt werden, indem man Kneter, Banburymischer oder Mischextruder verwendet. Das Einarbeiten der Wirkstoffe in das geschmolzene Trägermaterial, beispielsweise mittels Rührwerken, ist ebenfalls möglich. Nach der Herstellung des Konzentrats kann sich noch eine geeignete Konfektionierung, beispielsweise die Herstellung eines Pulvers, eines Tropf- oder eines Stranggranulats anschließen.

Das Konzentrat wird sodann in der vorgesehenen Menge in ein Polyolefin eingemischt. Auf diese Weise entsteht eine besonders gute Verteilung von fluorhaltigem Polymer und Wachs in der Polyolefinformmasse.

Fluorhaltiges Polymer und Wachs haben jeweils allein nur geringe Wirkung, zusammen zeigen sie jedoch, daß die erfindungsgemäße Polyolefinformmasse einen fast doppelt so hohen Ausstoß ohne Oberflächendefekte bringt, verglichen mit Formmassen, welche weder fluorhaltiges Polymer noch Wachs oder nur fluorhaltiges Polymer oder nur Wachs enthalten.

Mit der erfindungsgemäßen Polyolefinformmasse lassen sich somit sehr hohe Durchsätze bei der Extrusion bei sehr guter Oberfläche der Extrudate erreichen.

Die folgenden Beispiele sollen die Erfindung erläutern. Die Mengen sind in Gewichtsprozent angegeben.

Beispiel 1

Mittels eines Laborextruders (KK-Schnecke, D = 20 mm, L/D = 20; Düse D = 1,5 mm, L = 5 mm) wurde der Drehzahlbereich bestimmt, in welchem gerade noch keine Oberflächendefekte auftreten. Als Versuchsmaterial diente ein Folien-LLDPE mit einem MFI-Wert 190/2,16 von 1. Die Massetemperatur betrug 190 ° C.

| Mischung | max. Drehzahl min$^{-1}$ | max. Ausstoß g/min |
|---|---|---|

| | | |
|---|---|---|
| A | < 20 | < 7,5 |
| B | 25 | 11,2 |
| C | 40 | 19,0 |
| D | < 20 | < 8,6 |

A: LLDPE ohne fluorhaltiges Polymer ($^1$) und ohne Wachs ($^2$)     (Vergleich)

B: LLDPE mit 0,02 % fluorhaltiges Polmyer ($^1$)     (Vergleich)

C: wie B mit zusätzlich 0,01 % Wachs ($^2$)     (erfindungsgemäß)

D: LLDPE mit 0,01 % Esterwachs ($^2$)     (Vergleich)

($^1$): Terpolymer aus Vinylidenfluorid, Hexafluorpropylen und Tetrafluorethylen, Tp 126°C.

($^2$): Esterwachs aus Montansäure und Ethylenglykol.

Beispiel 2

Es wurde überprüft, wie sich die Zusätze auf das Drehmoment, den Schneckenrückdruck und den Druck im Extruder auswirken.

Meßextruder, KK-Schnecke D = 30 mm, L/D = 15; 30 min$^{-1}$, Düse 150/4;

| Mischung | M | G | P | R | Extrudatoberfläche |
|---|---|---|---|---|---|
| A | 135 | 40 | 130 | 11 | matt |
| B | 120 | 38,6 | 130 | 11,5 | glatt |
| C | 110 | 38,6 | 120 | 10 | glatt |
| D | 128 | 39,4 | 130 | 10,5 | matt |
| Mischungen wie in Beispiel 1 angegeben. M = Drehmoment in Nm; G = Ausstoß in g/min; P = Druck vor der Düse in bar; R = Schneckenrückdruck in KN | | | | | |

Ferner wurden aus den drei Mischungen Folien geblasen.

| Mischung | Massedruck | Folie | Bemerkungen |
|---|---|---|---|
| A | 135 | 80 µm | matt |
| B | 125 | 80 µm | klar |
| C | 115 | 80 µm | klar |
| D | 130 | 80 µm | matt |

**Patentansprüche**

1. Polyolefinformmasse, im wesentlichen bestehend aus 99,998 bis 95,0 Gew.-% mindestens eines Co- oder Terpolymerisates vom Ethylen mit 1-Olefinen mit 3 bis 10 Kohlenstoffatomen und einer Dichte von 0,900 bis 0,930 g/cm$^3$, 0,001 bis 2,5 Gew.-% eines fluorhaltigen Polymeren von Vinylidenfluorid,

4

EP 0 282 882 B1

Vinylfluorid, Tetrafluorethylen, Hexafluorpropylen oder Chlortrifluorethylen mit einem Fluorgehalt von mehr als 50 Gew.-% und einem Schmelz- oder Erweichungspunkt von 100 bis 300°C, und 0,001 bis 2,5 Gew.-% technischer Montansäure, eines Salzes der technischen Montansäure oder eines Esters der technischen Montansäure.

**2.** Polyolefinformmasse gemäß Anspruch 1, dadurch gekennzeichnet, daß das fluorhaltige Polymer ein Terpolymerisat von Vinylidenfluorid, Hexafluorpropylen und Tetrafluorethylen mit einem Fluorgehalt von 68 bis 76 Gew.-% ist.

**3.** Polyolefinformmasse gemäß Anspruch 1, dadurch gekennzeichnet, daß der Ester der technischen Montansäure ein Ester mit Ethandiol, 1,3-Butandiol, 1,4-Butandiol oder Glycerin ist.

**Claims**

**1.** A polyolefin molding composition, essentially comprising 99.998 to 95.0 % by weight of at least one copolymer or terpolymer of ethylene with 1-olefins having 3 to 10 carbon atoms and a density of 0.900 to 0.930 g/cm$^3$, 0.001 to 2.5 % by weight of a fluorine-containing polymer of vinylidene fluoride, vinyl fluoride, tetrafluoroethylene, hexafluoropropylene or chlorotrifluroethylene having a fluorine content of more than 50 % by weight and a melting point or softening point of 100 to 300°C, and 0.001 to 2.5 % by weight of technical grade montanic acid, a salt of technical grade montanic acid or an ester of technical grade montanic acid.

**2.** A polyolefin molding composition as claimed in claim 1, wherein the fluorine-containing polymer is a terpolymer of vinylidene fluoride, hexafluoropropylene and tetrafluoroethylene with a fluorine content of 68 to 76 % by weight.

**3.** A polyolefin molding composition as claimed in claim 1, wherein the ester of technical grade montanic acid is an ester with ethanediol, 1,3-butanediol, 1,4-butanediol or glycerol.

**Revendications**

**1.** Composition de moulage à base de polyoléfine, essentiellement composé de 99,998 à 95 % en poids d'au moins un co- ou terpolymérisat d'éthylène avec des 1 oléfines possédant 3 à 10 atomes de carbone et d'une densité de 0,900 à 0,930 g/cm$^3$, 0,001 à 2,5 % d'un polymère fluoré de fluorure de vinylidène, fluorure de vinyle, tétrafluoréthylène, hexafluoropropylène ou trifluorochloréthylène d'une teneur en fluor de plus de 50 % en poids et d'un point de fusion ou de ramollissement de 100 à 300°C, et 0,001 à 2,5 % en poids d'acide nonacosonoîque technique, d'un sel de l'acide montanique technique ou d'un ester de l'acide montanique technique.

**2.** Composition de moulage à base de polyoléfine selon la revendication 1, caractérisée en ce que le polymère fluoré est un terpolymérisat de fluorure de vinylidène, hexafluoropropylène et tétrafluoréthylène d'une teneur en fluor de 68 à 76 % en poids.

**3.** Composition de moulage à base de polyoléfine selon la revendication 1, caractérisée en ce que l'ester de l'acide montanique technique est un ester de cet acide avec l'éthane-diol, le 1,3 butane-diol, le 1,4 butane-diol ou la glycérine.

5